(19) Europäisches Patentamt
European Patent Office
Office européen des brevets

(11) EP 3 888 465 A1

(12) **EUROPEAN PATENT APPLICATION**
published in accordance with Art. 153(4) EPC

(43) Date of publication:
**06.10.2021 Bulletin 2021/40**

(21) Application number: **20741815.3**

(22) Date of filing: **15.01.2020**

(51) Int Cl.:
***A01N 55/02*** (2006.01) ***A01N 43/50*** (2006.01)
***A01N 43/36*** (2006.01) ***A01N 37/34*** (2006.01)

(86) International application number:
**PCT/KR2020/000719**

(87) International publication number:
**WO 2020/149633 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2019 KR 20190005276**

(71) Applicant: **LG Chem, Ltd.**
**Seoul 07336, (KR)**

(72) Inventors:
- **KO, Young Min**
  **Daejeon 34122 (KR)**
- **PARK, Kyo Sung**
  **Daejeon 34122 (KR)**
- **KIM, Jung Keun**
  **Daejeon 34122 (KR)**
- **HA, Joo Yeon**
  **Daejeon 34122 (KR)**

(74) Representative: **Hoffmann Eitle**
**Patent- und Rechtsanwälte PartmbB**
**Arabellastraße 30**
**81925 München (DE)**

# (54) ANTIBACTERIAL COMPOSITION

(57) The present application relates to an antibacterial composition. The present application can provide an antibacterial composition that has no hazardousness to the human body and exhibits antibacterial characteristics against various microorganisms or bacteria. The antibacterial composition can exhibit excellent antibacterial properties against so-called super bacteria.

Fig. 4

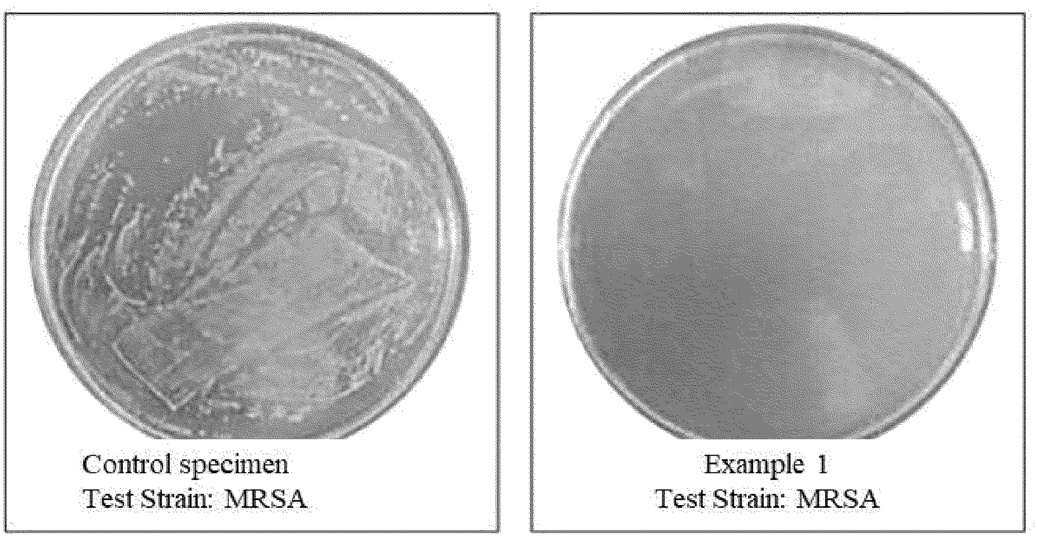


EP 3 888 465 A1

## Description

### Technical Field

This application claims priority based on Korean Patent Application No. 10-2019-0005276 filed on January 15, 2019, the disclosure of which is incorporated herein by reference in its entirety.

The present application relates to an antibacterial composition, specifically, an antibacterial composition comprising an organic-inorganic composite material.

### Background Art

Antibacterial agents are natural or synthetic compounds that can inhibit or eliminate growth or survival of microorganisms or bacteria. The antibacterial agent has enabled a wide range of surgical operations and greatly extended the human life-span.

The antibacterial agent is required to have hazardousness to the human body as well as an antibacterial effect. For example, OBPA (oxybisphenox arsine) as arsenic series, or triclosan or isothiazolinone as chlorine (Cl) series, and the like are typical organic antibacterial agents or insecticides, but their uses are limited because they are harmful to humans and the environment.

In addition, antibacterial agents using nanoparticles of metals such as Ag are known as inorganic antibacterial agents, which show the antibacterial effect, but there is also a research finding that metal nanoparticles can cause damage to DNAs.

Another issue related to antibacterial agents is super bacteria that have arisen from frequent use of antibacterial agents. The super bacteria are bacteria that are resistant to antibacterial agents, which are known to be caused by frequent use of antibacterial agents, and representative species include MRSA (methicillin-resistant *Staphylococcus aureus)* or VRSA (vancomycin-resistant *Staphylococcus aureus),* and the like.

## Disclosure

### Technical Problem

The present application is to provide an antibacterial composition. It is one object of the present application to provide an antibacterial composition having low or no toxicity, thereby being harmless to the human body, exhibiting an antibacterial effect against various microorganisms or bacteria, and particularly having an antibacterial effect against super bacteria.

### Technical Solution

The present application relates to an antibacterial composition. The antibacterial composition comprises an organic-inorganic composite material. The present application also relates to a use of the organic-inorganic composite material as an antibacterial agent.

The organic-inorganic composite material may be formed of building blocks, and may be a material having a porous three-dimensional structure. Here, the building block is a unit for forming the organic-inorganic composite material, which may mean, for example, a unit that forms a skeleton structure (topology), which is described below, alone.

The building block may comprise a metal component including a metal, and an organic ligand. Here, the metal component may be, for example, a metal alone or a metal cluster, and such a metal or metal cluster may be included in the metal component in an ionic form (for example, a cationic form).

In the organic-inorganic composite material or building block, the free ligand is bonded (for example, coordinately bonded) to the metal component, and a porous one-dimensional, two-dimensional or three-dimensional structure may be formed by such a bond. As an example of such an organic-inorganic composite material, a material (hereinafter, MOF or the like) referred to as a so-called MOF (metal organic framework) or MOP (metal organic polyhedron), and the like is known.

The organic-inorganic composite material may be the MOF or the like. When the organic-inorganic composite material is the MOF or the like, the metal component may be a so-called SBU (secondary building unit).

In the organic-inorganic composite material, or the MOF or the like, the size of pores may be controlled through the type and binding form of the metal component and/or the organic ligand. In the present application, it has been confirmed that a porous structure formed by linking a pore characteristic formed by a metal component and a free ligand, which satisfy conditions to be described below, and a skeleton structure (topology) associated with the arrangement of pores having such a pore characteristic, shows antibacterial properties against various microorganisms and bacteria

without hazardousness to the human body. In particular, such a porous structure may also surprisingly exhibit antibacterial properties against super bacteria such as MRSA. In addition, the antibacterial properties are expressed even when materials known to have no antibacterial property are applied as the metal component and the organic ligand, whereby the specific pore characteristic and the arrangement of pores, which are formed in the present application, can be expected to highly contribute to antibacterial properties.

For example, the metal in the metal component may be a metal belonging to the third to fifth periods of the periodic table. Properties, such as coordination numbers, of the metals belonging to the periods can be combined with the organic ligand, which is described below, to contribute to the formation of a suitable porous structure in the present application.

The building block formed by the metal component and the organic ligand may have a skeletal structure (topology) of fcu, sod, sra, mtn, bnn, tbo, csq, pcu, qom, nbo, cag, gar, crb, gls, mer, rho, fau, lta, poz, moz, zni, dia, lcs, dft, ana, frl or gme in the RCSR (reticular chemistry structure resource) database. The specific characteristic pores of the present application are included in the porous structure having the skeletal structure as above, whereby the desired antibacterial property can be secured.

In one example, the metal component and the organic ligand may have an L value of the following equation 1 in a range of 2 to 45.

[Equation 1]

$$L = C \times (M_m/M_L) \times 10$$

In Equation 1, $M_m$ is the molar mass of the metal contained in the metal component, $M_L$ is the molar mass of the component (for example, the organic ligand) excluding the metal component in the building block, and C is the number of coordinating functional groups in the organic ligand.

The molar mass ($M_m$, $M_L$) of Equation 1 above may be a mean molar mass. Thus, for example, when one kind of metal is applied as the metal of the metal component, the molar mass of the metal may become $M_m$ of Equation 1 above, and when two or more kinds of metals are applied, the mean (arithmetic mean) of the molar masses of the metals may become $M_m$ of Equation 1 above. Even in the case of the organic ligand, when one kind of organic ligand is applied as the organic ligand, the molar mass of the organic ligand may become $M_L$ of Equation 1 above, and when two or more kinds of organic ligands are applied, the mean (arithmetic mean) of the molar masses of the organic ligands may become $M_L$ of Equation 1 above.

In addition, the number of coordinating functional groups may also be a mean number, and for example, when one kind of organic ligand is applied as the organic ligand, the number of coordinating functional groups in the organic ligand may become C of Equation 1 above, and when two or more kinds of organic ligands are applied, the mean (arithmetic mean) of the respective numbers of coordinating functional groups of the organic ligands may become C of Equation 1 above.

In the present application, the metal component may be the metal alone, or may be a metal cluster including the metals, or may be an ion of the metal or the metal cluster, and the metal component may be combined with the organic ligand to provide a building block or an organic-inorganic composite material having one of the skeleton structures (topologies) listed below.

For example, as the metal component, a metal component comprising a metal belonging to the third to fifth periods of the periodic table may be used. As the metal, for example, a metal ion having coordination sites in a range of 2 to 5 may be applied. For example, the metal cluster may be one comprising a metal belonging to the third to fifth cycles of the periodic table or another component in addition to the ion of the relevant metal and having coordination sites in a range of 2 to 5. At this time, another component may be a nonmetal component. Specifically, in forming the structure of the organic-inorganic composite material to be described below, the metal cluster may further comprise an anion providing element such as oxygen (O), nitrogen (N), sulfur (S), and/or phosphorus (P) so that the metal cluster may have a predetermined charge. For example, the metal cluster may comprise oxygen (O) atoms, such as $Zn_4O(CH_3COO)_6$ clusters, which can be obtained by reacting zinc ions ($Zn^{2+}$) with an acetate salt.

In one example, the organic-inorganic composite material may comprise one or more kinds of metals or metal ions.

In one example, the metal cluster forming the organic-inorganic composite material may comprise one or more kinds of metals or metal ions.

Exemplary metal types that can be used as the metal component are described in detail below.

The organic ligand is a generic term for compounds (chemical species) such as ions or molecules coordinated with the metal component, which may be combined with the metal component to provide an organic-inorganic composite material having one of the skeleton structures listed below. That is, the organic ligand means a compound having at

least one functional group (hereinafter, coordinating functional group) capable of coordinating to a metal component.

The ligand may be used as a meaning including a monodentate ligand and a multidentate ligand. For example, the organic ligand may include a linking ligand or bridging organic linker that links two or more adjacent metal components (metals, or metal clusters, and/or ions thereof), whereby the organic-inorganic composite material may have empty spaces (voids) or pores in its two-dimensional or three-dimensional solid structure. In addition, the organic ligand may also include a non-linking ligand that coordinates to any one metal, but does not link adjacent metal components (metals, metal clusters, and/or ions thereof).

The organic-inorganic composite material may comprise one or more kinds of monodentate ligands and/or one or more kinds of multidentate ligands.

Exemplary compound types that can be used as the organic ligand are described in detail below.

The organic-inorganic composite material comprises one or more kinds of metal components, and one or more kinds of organic ligands. Adjacent metal components may be linked by multidentate ligands. The organic-inorganic composite material may have a building block which is a unit that predetermined metal components are linked by predetermined organic ligands. As these building blocks are repeated, a skeletal structure can be implemented by a linked network. The organic-inorganic composite material formed by repeated networks of building blocks has a porosity according to the crystal structure.

Through control of pore sizes, forms and/or structures according to the type of metal, the type of organic ligand, their structure and/or their physicochemical property adjustment, and control of topology of a building block or an organic-inorganic composite material itself, antibacterial characteristics can be imparted to the organic-inorganic composite material and the composition comprising the same.

The organic-inorganic composite material having excellent antibacterial characteristics and hazardousness to the human body provided by the present application may satisfy Equation 1 above. Surprisingly, the antibacterial characteristics of the organic-inorganic composite material of the present application can be expressed even when the organic-inorganic composite material is formed from a non-antibacterial metal and a non-antibacterial ligand.

In one example, the building block or the organic-inorganic composite material may be formed by a metal and an organic ligand such that the L value in Equation 1 below is in the range of 2 to 45. The building block is a compound unit that is repeated to form the skeleton structure of the organic-inorganic composite material.

[Equation 1]

$$L = C \times (M_m/M_L) \times 10$$

In Equation 1 above, $M_m$ is the molar mass of the metal in the metal component of the building block, $M_L$ is the molar mass of the component (for example, the organic ligand) excluding the metal component in the building block, C is the number of the coordinating functional groups in the organic ligand. L in Equation 1 may be a dimensionless value.

$M_m$ in Equation 1 may be a mean molar mass, as described above, and for example, when two or more metals are present in one building block, it may be the arithmetic mean with respect to the molar masses (g/mol) of the respective metals. When the building block comprises only one metal, the $M_m$ is the molar mass of the relevant metal.

$M_L$ in Equation 1 may be a mean molar mass, as described above, and for example, when two or more organic ligands are included in one building block, the arithmetic mean of the molar masses (g/mol) of the organic ligands may be the $M_L$. When the building block comprises only one organic ligand, the $M_L$ may be the molar mass of the relevant organic ligand.

C in Equation 1 may also be the mean number of coordinating functional groups, as described above. Therefore, when one building block includes two or more organic ligands, the arithmetic mean with respect to the numbers of coordinating functional groups in the respective organic ligands may be the C. When the building block comprises only one organic ligand, C may be the number of coordinating functional groups in the relevant ligand.

In another example, the L value may be 2.1 or more, 2.2 or more, 2.3 or more, 2.4 or more, 2.5 or more, 3.0 or more, 3.5 or more, 4.0 or more, 4.5 or more, 5.0 or more, 5.5 or more, 6.0 or more, 6.5 or more, 7.0 or more, 7.5 or more, 8.0 or more, 8.5 or more, 9.0 or more, 10 or more, 10.5 or more, 11.0 or more, 11.5 or more, 12.0 or more, 12.5 or more, 13.0 or more, 13.5 or more, 14.0 or more, 14.5 or more, or 15.0 or more. For example, the L value may be 44.0 or less, 43 or less, 42 or less, 41 or less, or 40 or less, 35 or less, 30 or less, 25 or less, 20 or less, 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, 4 or less, or 3 or less.

In one example, the L value may be in a range of 2.0 to 20. For example, the L value may be 2.1 or more, 2.2 or more, 2.3 or more, 2.4 or more, or 2.5 or more. Specifically, the L value may be, for example, 3.0 or more, 3.5 or more, 4.0 or more, 4.5 or more, 5.0 or more, 5.5 or more, 6.0 or more, 6.5 or more, 7.0 or more, 7.5 or more, 8.0 or more, 8.5 or more, 9.0 or more, 10.0 or more, 10.5 or more, 11.0 or more, 11.5 or more, 12.0 or more, 12.5 or more,

13.0 or more, 13.5 or more, 14.0 or more, 14.5 or more, or 15.0 or more. Also, the L value may be, for example, 19.0 or less, 18.5 or less, 18.0 or less, 17.5 or less, 17.0 or less, 16.5 or less, 16.0 or less, 15.5 or less, 15.0 or less, 14.5 or less, 14.0 or less, 13.5 or less, 13.0 or less, 12.5 or less, 12.0 or less, 11.5 or less, 11.0 or less, 10.5 or less, or 10.0 or less.

In another example, the L value may be in the range of about 4 to 8, or may also be in the range of 10 to 13.

When the L value calculated according to Equation 1 satisfies the above range, it is advantageous to implement a pore characteristic capable of securing antibacterial properties. As a result of being experimentally confirmed, when the L value exceeds the above range, the antibacterial properties of the organic-inorganic porous material may deteriorate. It is assumed that this is because the surface area of the organic-inorganic composite material decreases as L is too large. When the L value is less than the above range, there may be a problem that the structural stability of the organic-inorganic composite material is lowered.

As long as the L value is satisfied, $M_m$, $M_L$, and C values are not particularly limited.

In one example, the ratio ($M_m/M_L$) of $M_m$ to $M_L$ in Equation 1 above may satisfy a range of 0.1 to 2.5. As a result of being experimentally confirmed, when the equation is satisfied, it is advantageous to satisfy the L value, and as a result, excellent antibacterial properties and harmlessness to the human body can be secured. In another example, the ratio ($M_m/M_L$) may be 0.2 or more, 0.3 or more, 0.4 or more, 0.5 or more, 0.6 or more, 0.7 or more or 0.75 or more, or may also be 2.4 or less, 2.3 or less, 2.2 or less, 2.1 or less, 2.0 or less, 1.9 or less, 1.8 or less, 1.7 or less, 1.6 or less, 1.5 or less, 1.4 or less, 1.3 or less, 1.2 or less, 1.1 or less, 1.0 or less, 0.9 or less, or 0.85 or less or so.

The $M_m$ may be in a range of 15 to 130 g/mol. Specifically, the $M_m$ may also be, for example, 20 g/mol or more, 25 g/mol or more, 30 g/mol or more, 35 g/mol or more, 40 g/mol or more, 45 g/mol or more, 50 g/mol or more, 55 g/mol or more, 60 g/mol or more, 65 g/mol or more, 70 g/mol or more, 75 g/mol or more, 80 g/mol or more, 85 g/mol or more, 90 g/mol or more, or 95 g/mol or more. For example, the $M_m$ may also be 125 g/mol or less, 120 g/mol or less, 115 g/mol or less, 110 g/mol or less, 105 g/mol or less, 100 g/mol or less, or 95 g/mol or less.

The $M_L$ may be in a range of 15 to 650 g/mol. For example, the $M_L$ may also be 20 g/mol or more, 25 g/mol or more, 30 g/mol or more, 35 g/mol or more, 40 g/mol or more, 45 g/mol or more, 50 g/mol or more, 55 g/mol or more, 60 g/mol or more, 65 g/mol or more, 70 g/mol or more, 75 g/mol or more, 80 g/mol or more, 85 g/mol or more, 90 g/mol or more, 95 g/mol or more, 100 g/mol or more, 105 g/mol or more, 110 g/mol or more, 115 g/mol or more, 120 g/mol or more, 125 g/mol or more, 130 g/mol or more, 135 g/mol or more, 140 g/mol or more, 145 g/mol or more, 150 g/mol or more, 165 g/mol or more, 170 g/mol or more, 175 g/mol or more, 185 g/mol or more, 190 g/mol or more, 195 g/mol or more, 200 g/mol or more, 205 g/mol or more, 210 g/mol or more, or 215 g/mol or more. For example, the $M_L$ may also be 600 g/mol or less, 550 g/mol or less, 500 g/mol or less, 450 g/mol or less, 400 g/mol or less, 350 g/mol or less, 300 g/mol or less, 250 g/mol or less, 245 g/mol or less, 240 g/mol or less, 235 g/mol or less, 230 g/mol or less, 225 g/mol or less, 220 g/mol or less, 215 g/mol or less, or 210 g/mol or less.

In one example, the C may be 1 or more. For example, it may be a number in a range 2 to 6, 2 to 5, or 2 to 4.

When the characteristics (size, form and/or structure) of pores included in the building block that the organic-inorganic composite material satisfies Equation 1 above are associated with the skeleton structure (topology) to be described below, it is believed that the porous structure suitable for antibacterial properties is formed. As shown in the following experimental examples, in the case of satisfying Equation 1 above and having the skeletal structure mentioned in the present application, the organic-inorganic composite material and/or the composition comprising the same can exhibit antibacterial properties against super bacteria such as MRSA (methicillin-resistant *Staphylococcus aureus),* as well as *Escherichia coli* and *Staphylococcus aureus.* In addition, even when the organic-inorganic composite material is formed from a non-antibacterial metal and a non-antibacterial organic ligand, the overall porous structure can exhibit antibacterial properties.

The building block comprising the metal component and the organic ligand or the organic-inorganic composite material formed therefrom may have a specific skeleton structure (topology). For example, the organic-inorganic composite material may have a structure (topology) of fcu, sod, sra, mtn, bnn, tbo, csq, pcu, qom, nbo, cag, gar, crb, gls, mer, rho, fau, lta, poz, moz, zni, dia, lcs, dft, ana, frl or gme in the RCSR (reticular chemistry structure resource) database. The method of confirming the structure of the organic-inorganic composite material, for example, the MOF or the like, is known, which can be identified through, for example, a single-crystal X-ray diffraction analysis. Identification criteria follow the provisions of the RCSR (reticular chemistry structure resource) database. Even when the MOF or the like is composed by the same metal component (SBL) and organic ligand, it is known that the skeleton structure (topology) varies depending on the ratio therebetween or the synthetic method. In the manufacturing field of the MOF or the like, synthetic methods or raw material ratios for forming a desired skeleton structure (topology) are known depending on the raw material used, but it is not known that antibacterial properties are expressed by the combination of the skeleton structure and pore characteristics as described above. That is, when the organic-inorganic composite material or building block satisfying Equation 1 has the above-listed skeletal structure, it may be advantageous to secure antibacterial properties.

Although not particularly limited, in one example, the building block comprising the metal component and the organic ligand and/or the organic-inorganic composite material formed therefrom may have one skeleton structure

(topology) of sod, fcu, tbo, mtn, bnn, or sra.

The metal included in the organic-inorganic composite material may be a metal belonging to periods 3 to 5 of the periodic table. For example, the organic-inorganic composite material may comprise one or more metals selected from Na, Mg, Al, K, Ca, Sc, Ti, Vm Cr, Mn, Fe, Co, Ni, Cu, Zn, Ga, Rb, Sr, Y, Zr, Nb, Mo, Tc, Ru, Rh, Pd, Ag, Cd, In and Sn, or ions thereof. In one example, the organic-inorganic composite material may comprise a non-antibacterial metal of the metals belonging to periods 3 to 5. In the present application, the term "non-antibacterial metal" may mean, for example, a metal known to have no growth inhibition activity against bacteria such as *Escherichia coli*, *Staphylococcus aureus* or MRS (methicillin-resistant *Staphylococcus aureus*). In other words, the term non-antibacterial metal may be used as a meaning excluding metals known to have an action of reducing bacteria in a culture experiment for certain bacteria alone, such as Ag, that is, an antibacterial metal known to have a high bacteriostatic rate. In one example, the organic-inorganic composite material may not comprise Ag in the metal component.

In one example, the non-antibacterial property of the metal component or metal may mean a case of forming a surface having an antibacterial activity value of less than 2.0 when performing an antibacterial test according to JISZ2801 or equivalents using certain bacteria. According to JISZ2801, the antibacterial activity value of 2.0 or more can be seen as having antibacterial properties, and thus it can be interpreted that in the present application, the metal component used upon forming the organic-inorganic composite material or building block has non-antibacterial properties. Upon performing the test, the metal component or metal (except for the organic ligand in the constitution forming the organic-inorganic composite material or building block) may be used to form the surface for the antibacterial test. The test may be performed on a single layer composed of only a metal component, or may also be performed in a state where a metal component forms a layer or a film with other polymer components or film components. Then, the predetermined bacteria used upon performing the test may be gram-negative bacteria, gram-positive bacteria or super bacteria. Specifically, the bacterium used upon performing the antibacterial test according to JISZ2801 may include *Escherichia coli, Staphylococcus aureus* or MRSA (methicillin-resistant *Staphylococcus aureus*). However, it is not limited thereto.

In one example, the composition may comprise one or more metals selected from Zr, Zn, Fe, Cu, Al, Mg, Ni and Cr, or ions thereof as the non-antibacterial metal. Although these metals are non-antibacterial by themselves, they can be combined with organic ligands to form antibacterial organic-inorganic composite materials satisfying Equation 1.

The metal may have various oxidation numbers in the process of forming the organic-inorganic composite material. For example, the metals may have oxidation numbers in a range of +1 to +5 or in a range of +2 to +5. The same metal may also have different oxidation numbers depending on the components participating in the formation of the metal clusters or depending on the three-dimensional shape of the organic-inorganic composite material formed in combination with the organic ligand. For example, the organic-inorganic composite material may comprise one or more selected from $Zr^{4+}$, $Zn^{2+}$, $Fe^{3+}$, $Fe^{2+}$, $Cu^{2+}$, $Cu^{+}$, $Al^{3+}$, $Mg^{2+}$, $Ni^{2+}$, $Ni^{+}$ and $Cr^{3+}$.

Even when the same metal is used to form the organic-inorganic composite material, the skeletal structure (topology) of the building block or the organic-inorganic composite material may vary according to the length or form of the organic ligand, the satisfaction of Equation 1 and/or the synthesis method thereof, and the like, whereby the antibacterial properties and toxicity to the human body, and the like may vary.

In one example, the organic ligand may have non-antibacterial properties. For example, a compound known to have no growth inhibition activity against bacteria such as *Escherichia coli, Staphylococcus aureus* or MRSA (methicillin-resistant *Staphylococcus aureus*), or a compound (salt) derived therefrom may be used as the organic ligand.

In one example, the non-antibacterial property of the organic ligand may mean a case of forming a surface having an antibacterial activity value of less than 2.0 when performing an antibacterial test according to JISZ2801 or equivalents using certain bacteria. According to JISZ2801, the antibacterial activity value of 2.0 or more can be seen as having antibacterial properties, and thus it can be interpreted that in the present application, the organic ligand used upon forming the organic-inorganic composite material or building block has non-antibacterial properties. Upon performing the test, the organic ligand (except for the metal component in the constitution forming the organic-inorganic composite material or building block) may be used to form the surface for the antibacterial test. The test may be performed on a single layer composed of only an organic ligand, or may also be performed in a state where an organic ligand forms a layer or a film with other polymer components or film components. The type of bacteria used in the relevant test is applied in the same manner as mentioned above.

The organic ligand may have a hydrocarbon substructure, and may comprise, for example, one or more of oxygen (O), nitrogen (N), sulfur (S) and phosphorus (P) so that coordination bonds to metal components may be formed. Specifically, the organic ligand may comprise a coordinating functional group such as $-CO_2H$, $-SO_3H$, $-Si(OH)_3$, $-PO_3H$, -CN, $-NH_2$, -NHR, -NR (wherein, R may be any hydrocarbon), $-NO_2$, halogen (-X), $CO_2$-, $CS_2$-, $NO^{2-}$, and/or $SO^{3-}$. Then, the organic ligand may comprise, as a hydrocarbon substructure in which such a functional group is bonded, an alkyl group or a cycloalkyl group having carbon atoms in a range of 1 to 40, an alkylene group having carbon atoms in a range of 1 to 40, or an aromatic compound such as a condensed or uncondensed aryl group. Here, the hydrocarbon of R may be exemplified by a linear, branched or cyclic alkyl group or alkoxy group having 1 to 20 carbon atoms, 1 to 16 carbon atoms, 1 to 12 carbon atoms, 1 to 8 carbon atoms or 1 to 4 carbon atoms, or a linear, branched or cyclic alkenyl group

or alkynyl group having 2 to 20 carbon atoms, 2 to 16 carbon atoms, 2 to 12 carbon atoms, 2 to 8 carbon atoms or 2 to 4 carbon atoms, and the like, but is not limited thereto.

In one example, the organic-inorganic composite material may comprise one or more of compounds represented by Formulas 1a and 1b below or compounds derived therefrom as the organic ligand.

[Formula 1a]

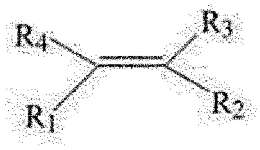

In Formula 1a above, $R_1$, $R_2$, $R_3$ and $R_4$ may be each independently hydrogen, an alkyl group, an alkoxy group, a hydroxy group, an amino group or a coordinating functional group.

Regarding Formula 1a, the alkyl group may be a substituted or unsubstituted alkyl group. The carbon number of the alkyl group is not particularly limited. For example, the alkyl group may be an alkyl group having carbon atoms in a range of 1 to 40, a range of 1 to 36, a range of 1 to 32, a range of 1 to 28, a range of 1 to 24, a range of 1 to 20, a range of 1 to 16, a range of 1 to 12, a range of 1 to 8, or a range of 1 to 4. In addition, the alkyl group may be linear, branched or cyclic. The alkyl group may be substituted with N, O and/or S. The ring also includes an aromatic ring or a non-aromatic ring.

In one example, the coordinating functional group which may be included in Formula 1a above may be one or more selected from $-CO_2H$, $-SO_3H$, $-Si(OH)_3$, $-PO_3H$, $-NH_2$, -NHR, -NR (wherein, R may be any hydrocarbon)), $-NO_2$, halogen (-X), $CO_2$-, $CS_2$-, $NO_2$-, and $SO_3$-. Here, the hydrocarbon of R may be exemplified by a linear, branched or cyclic alkyl group or alkoxy group having 1 to 20 carbon atoms, 1 to 16 carbon atoms, 1 to 12 carbon atoms, 1 to 8 carbon atoms or 1 to 4 carbon atoms, or a linear, branched or cyclic alkenyl group or alkynyl group having 2 to 20 carbon atoms, 2 to 16 carbon atoms, 2 to 12 carbon atoms, 2 to 8 carbon atoms or 2 to 4 carbon atoms, and the like, but is not limited thereto.

Although not particularly limited, in another example, the coordinating functional group that may be included in Formula 1a above may be one or more selected from a carboxyl group (-COOH), a carboxylic acid anion group (-COO-), an amine group ($-NH_2$), a nitro group ($-NO_2$), halogen (-X) and a sulfonic acid group ($-SO_3H$).

In one example, at least one of $R_1$ to $R_4$ in Formula 1a above may be a coordinating functional group.

In one example, at least two of $R_1$ to $R_4$ in Formula 1a above may be coordinating functional groups. For example, $R_1$ and $R_2$ may both be coordinating functional groups. In another example, $R_1$ and $R_3$ may be the same or different coordinating functional groups, and $R_2$ and $R_4$ may be independently hydrogen, an alkyl group, a hydroxy group or an amino group. The kind of the specific compound is not particularly limited, but a compound capable of providing an organic ligand such as Formula 1a may be, for example, fumaric acid.

[Formula 1b]

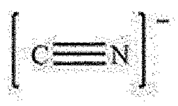

In one example, the ligand of Formula 1b above may be coordinated with a metal (M = Ti, V, Cr, Mn, Fe, Co, Ni, Pd, Pt, Cu, Ag, Au, etc.) to have a form such as $[M(CN)_6]^{3-}$, $[M(CN)_4]^{2-}$, or $[M(CN)_2]^-$. The kind of organic-inorganic porous composite material including the ligand of Formula 1b is not particularly limited, but may be, for example, Prussian blue.

In Formula 1a, $R_3$ and $R_4$ may be connected to each other to form a cyclic compound, or may not be so.

In one example, $R_3$ and $R_4$ of Formula 1a above may be connected to each other to form a cyclic compound such as Formula 2 below.

In this case, $R_1$ and $R_2$ may or may not be coordinating functional groups. Specifically, when a cyclic compound such as Formula 2 is formed, unless $R_1$ and $R_2$ are both coordinating functional groups, one or more of $R_5$, $R_6$, $R_7$, and $R_8$ may be coordinating functional groups. Alternatively, when a cyclic compound such as Formula 2 is formed, if one or more of $R_1$ and $R_2$ are coordinating functional groups, $R_5$, $R_6$, $R_7$, and $R_8$ may not be coordinating functional groups or one or more of them may be coordinating functional groups.

[Formula 2]

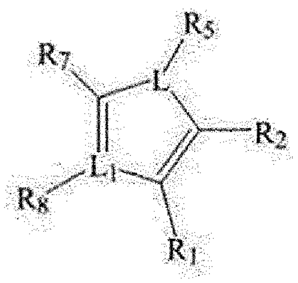

In Formula 2 above, L is a nitrogen atom or a divalent residue of Formula 3 below, $L_1$ is a nitrogen atom or a carbon atom, and $R_1$, $R_2$, $R_5$, $R_7$ and $R_8$ are each independently hydrogen, an alkyl group, an alkoxy group, a hydroxy group, an amino group or a coordinating functional group, where $R_8$ may not be present when $L_1$ is a nitrogen atom.

[Formula 3]

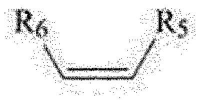

In Formula 3, $R_8$ and $R_5$ may be each independently hydrogen, an alkyl group, a hydroxy group, an amino group or a coordinating functional group.

In one example, regarding Formula 2 above, when both L and $L_1$ are nitrogen atoms, the compound of Formula 1 may be an imidazole-based ligand. As one example of such an imidazole-based compound, 2-methyl imidazole or 2-ethyl imidazole may be used, without being limited thereto.

In one example, regarding Formula 2 above, when L is a divalent residue of Formula 3 above and $L_1$ is a nitrogen atom, the compound of Formula 1 may be a pyridine-based ligand.

In one example, regarding Formula 2 above, when L is a divalent residue of Formula 3 above and $L_1$ is a carbon atom, the compound of Formula 1 may be an aromatic ligand. Although not particularly limited, for example, terephthalic acid, 2,5-dihydroxyterephthalic acid, 1,2,3-benzenetricarboxylic acid, or 1,3,5-benzenetricarboxylic acid may be used.

In one example, regarding Formulas 1 to 3 above, the alkoxy group is a functional group represented by -OR, wherein R may be a linear, branched or cyclic hydrocarbon having carbon atoms of 1 to 40 or less, specifically 1 to 20, 1 to 16, 1 to 12 carbon atoms, 1 to 8 or 1 to 4 carbon atoms. For example, R may be a hydrocarbon including an alkyl group such as methyl or ethyl, or an aromatic ring such as an aryl group. Then, the alkoxy group may be optionally substituted by one or more substituents. As an example of the aryl group that the alkoxy group contains, a phenyl group, a benzyl group, a biphenyl group or a naphthalene group, and the like may be included.

Although the organic ligands are non-antibacterial, but when it is combined with the above-explained non-antibacterial metal to form an organic-inorganic composite material that satisfies Equation 1, it is possible to impart antibacterial properties to the organic-inorganic composite material and the composition comprising the same.

In the organic-inorganic composite material or building block, the organic ligand may be included in a ratio in a range of about 0.00001 mol to 5 mol per mole of the metal or metal component. In another example, the ratio may be 0.0001 mol or more, 0.001 mol or more, 0.01 mol or more, 0.1 mol or more, 0.2 mol or more, 0.3 mol or more, 0.4 mol or more, or 0.5 mol or more, or may also be 4.9 mol or less, 4.8 mol or less, 4.7 mol or less, 4.6 mol or less, 4.5 mol or less, 4.4 mol or less, 4.3 mol or less, 4.2 mol or less, 4.1 mol or less, 4.0 mol or less, 3.9 mol or less, 3.8 mol or less, 3.7 mol or less, 3.6 mol or less, or 3.5 mol or less or so.

The method for preparing the organic-inorganic composite material including the metal component and the organic ligand is not particularly limited, which may follow, for example, a manner known to prepare the MOF or the like. Such a manner may comprise, for example, processes of mixing a metal salt and a compound capable of providing an organic ligand in an appropriate solvent according to the purpose, and rubbing or heating the mixture, followed by filtration and drying. In the field of the MOF or the like, various methods capable of obtaining the desired organic-inorganic composite materials depending on the desired structures, the metal components (SBU) and the organic ligands are known.

In one example, the organic-inorganic composite material is formed from a building block comprising a non-antibacterial metal and a non-antibacterial organic ligand, which may be a material having antibacterial properties against all of gram-negative bacteria, gram-positive bacteria and super bacteria. The antibacterial property is measured according to the method described in the following experimental examples, which may mean a case where the bacteriostatic rate for each of the gram-negative bacteria, gram-positive bacteria and super bacteria is 95% or more, preferably, 96% or more, 97% or more, 98% or more, 99% or more, and more preferably, about 100%.

In one example, the antibacterial property of the organic-inorganic composite material may mean a case of forming a surface having an antibacterial activity value of 2.0 or more when performing an antibacterial test according to JISZ2801 or equivalents using predetermined bacteria. According to JISZ2801, the activity value corresponds to the reduction of the viable bacteria count to 1/100 or less when using the organic-inorganic composite material. Even when the non-antibacterial metal component and the non-antibacterial organic ligand are included, the organic-inorganic composite material formed from the building block satisfying Equation 1 may have antibacterial properties. The test may be performed on a single layer composed of only an organic-inorganic composite material, or may also be performed in a state where a layer or film composed by including other components and the like is formed. The type of bacteria used in the test is applied in the same manner as mentioned above.

The composition may be non-toxic to the human body, as confirmed by the following experimental examples. For example, the composition may have a characteristic that the lethal concentration 50 (LC50) measured according to an acute inhalation toxicity test (Test No. 436, dust atmosphere) exceeds 1.0 mg/L. In another example, the composition may have a characteristic that the lethal concentration 50 (LC50) according to the acute inhalation toxicity test (Test No. 436, dust atmosphere) is 5.0 mg/L or more. In this specification, the nontoxic to the human body means a case belonging to category 4 or 5 in the toxicity classification criteria according to the GHS (globally harmonized system of classification & labeling chemicals) criteria.

In one example, the organic-inorganic composite material may be in the form of particles or powder.

In one example, the antibacterial composition may comprise a polymer component and the organic-inorganic composite material. When the polymer component is included, it may be advantageous to prepare the composition in the form of pellets, nonwovens or films.

The type of polymer that can be included in the antibacterial composition is not particularly limited. For example, polyolefin (PO), polystyrene (PS), polyacrylonitrile (PAN), acrylonitrile butadiene styrene (ABS), polylactic acid (PAL), polyvinyl acetate (PVAc), polyvinyl pyrrolidone (PVP) or polyvinyl alcohol (PVA), and the like can be used.

When the polymer is included, the antibacterial composition may comprise the organic-inorganic composite material, for example, in an amount of 0.001 parts by weight or more relative to 100 parts by weight of the total composition. Specifically, the composition may comprise the organic-inorganic composite material in a content of 0.1 parts by weight or more, 1 part by weight or more, 5 parts by weight or more, 10 parts by weight or more, 15 parts by weight or more, 20 parts by weight or more, 25 parts by weight or more, 30 parts by weight or more, 35 parts by weight or more, 40 parts by weight or more, 45 parts by weight or more, or 50 parts by weight or more. The content upper limit of the organic-inorganic composite material is not particularly limited, but for example, the organic-inorganic composite material may be used in a content of about 100 parts by weight or less in the composition. Specifically, the composition may comprise the organic-inorganic composite material in a content of 99 parts by weight or less, 98 parts by weight or less, 97 parts by weight or less, 96 parts by weight or less, or 95 parts by weight or less, and more specifically, in a content of 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, 45 parts by weight or less, 40 parts by weight or less, 35 parts by weight or less, 30 parts by weight or less, 25 parts by weight or less, or 20 parts by weight or less.

In one example, the composition may further comprise a functional material. The functional material may be, for example, a drug delivery agent, a fragrance, a deodorant, or an antibacterial substance. That is, the composition may further comprise one or more of a drug delivery agent, a fragrance, a deodorant and an antibacterial substance.

The form in which the composition comprises the drug delivery substance, the fragrance, the deodorant, and/or the antibacterial substance is not particularly limited. For example, the drug delivery agent, fragrance, deodorant or antibacterial substance in the composition may be present in admixture with the organic-inorganic composite material. In some cases, it may be in the form that the material is supported in the organic-inorganic composite material, and the composition may be configured in the form that the organic-inorganic composite material is included in a functional

preparation.

The kind of drug delivery substances that may be included in the composition is not particularly limited. For example, the drug delivery substance including a carrier for oral administration such as lactose, starch, a cellulose derivative, magnesium stearate and stearic acid; or a carrier for parenteral administration such as water, a suitable oil, saline, aqueous glucose and glycol may be used.

The kind of fragrances that may be included in the composition is not particularly limited. For example, the fragrance includes both natural and synthetic fragrances, where a substance capable of providing, for example, flavors such as lavender, ginger, bergamot, spearmint or lime may be used.

The kind of deodorants that may be included in the composition is not particularly limited. For example, glutamic acid, which is a chemical refresher, or a flavonoid-based deodorant extracted from a plant, and the like may be used.

The kind of antibacterial substances that may be included in the composition is not particularly limited. For example, as the antibacterial substance, propolis, xylitol, mastic, alpha pinene or a natural mineral component (ESN substance), and the like may be used.

When the composition comprises a functional material, the antibacterial composition may comprise the organic-inorganic composite material, for example, in an amount of 0.001 parts by weight or more, relative to 100 parts by weight of the total composition, and may comprise, as other components, the functional material and/or the polymer component. The content of the functional material and the organic-inorganic composite material according to one embodiment of the present application is based on the content ratio in the composition at the time of including the polymer as described above.

In one example, the composition may be used as a paint. For example, it may be used as a material having a use as described below or a material coated on an article surface.

As long as antibacterial properties, like inhibition of bacterial growth, are required, the use of the composition is not particularly limited. For example, the composition may be used for syringe materials, injection storage container or tube materials, infusion pack materials, infusion storage container or tube materials, gauze, bandages, sterile gloves, antibacterial fibers, endothelial materials for clothes or shoes, automobile interior plastic materials, indoor/outdoor paints, kitchen container or kitchen utensil materials, home appliance materials, plastic materials for toilets or bathrooms, food packages or medical devices, and the like.

In addition, considering that other materials may be included in the pores of the organic-inorganic composite material, the material and the composition comprising the same may be used as carriers for gas transport, drug delivery receptors, harmful gas collectors, or dielectric materials.

## Advantageous Effects

The present application can provide an antibacterial composition that has no hazardousness to the human body and exhibits antibacterial characteristics against various microorganisms or bacteria. The antibacterial composition can exhibit excellent antibacterial properties against so-called super bacteria.

## Brief Description of Drawings

Fig. 1 is a schematic diagram for explaining the antibacterial evaluation method (KCL-FIR 1003) of Test Example 2.

Fig. 2 is antibacterial evaluation results of *Escherichia coli* concerning Example 1.

Fig. 3 is antibacterial evaluation results of *Staphylococcus aureus* concerning Example 1.

Fig. 4 is antibacterial evaluation results of super bacteria concerning Example 1.

## Mode for Invention

Hereinafter, the present application will be described in detail through examples. However, the scope of the present application is not limited by the following examples.

### Preparation Example 1: Preparation of Organic-Inorganic Composite Material (A)

In a 20 mL vial, 18 mL of DMF (N,N-dimethylformamide) was placed, and 0.210 g of $Zn(NO_3)_2 \cdot 4H_2O$ ($8.03 \times 10^{-4}$ mol) and 0.060 g of 2-methylimidazole (H-MeIM) ($7.31 \times 10^{-4}$ mol) were dissolved. The vial cap was closed and

the mixture was heated at a temperature of about 140°C for about 24 hours. The mother liquid was removed from the reaction solution and 20 mL of chloroform was added thereto. Colorless polygonal crystals formed on the top of the vial were collected, washed with DMF (10 mL × 3), and then dried in air for about 10 minutes to obtain an organic-inorganic composite material (A). The organic-inorganic composite material (A) was a porous material having a structure that a metal component having zinc ions ($Zn^{2+}$) was linked by 2-methylimidazole (H-MeIM, organic ligand, number of coordinating functional groups: 2), and it was identified that it had sod topology of the RCSR (reticular chemistry structure resource) database through a single-crystal X-ray diffraction analysis.

**Preparation Example 2: Preparation of Organic-Inorganic Composite Material** (B)

0.053 g of ZrCl4 (0.227 mmol) and 0.034 g of 1,4-benzenenedicarboxylic acid ($H_2BDC$) (0.227 mmol) were dissolved in 24.9 g of DMF (N,N-dimethylformamide) (340 mmol) at room temperature. The mixed solution was sealed and reacted in an oven preheated to about 120°C for about 24 hours. After completion of the reaction, the reaction solution was naturally cooled, filtered and then washed with DMF (N,N-dimethylformamide), followed by natural drying at room temperature to obtain an organic-inorganic composite material (B). The organic-inorganic composite material (B) was a porous material having a structure that a metal component having zirconium ions ($Zr^{4+}$) was linked by 1,4-benzenenedicarboxylic acid ($H_2BDC$, organic ligand, number of coordinating functional groups: 2), and it was identified that it had fcu topology of the RCSR (reticular chemistry structure resource) database through a single-crystal X-ray diffraction analysis.

**Preparation Example 3: Preparation of Organic-Inorganic Composite Material** (C)

2.17 g of 2-aminoterephthalic acid and 3.8 g of $ZrCl_4$ were dissolved in 36 mL of DMF (N,N-dimethylformamide). The mixed solution was stirred for about 30 minutes and then placed in a Teflon vessel, and reacted in a pressure vessel at a temperature of about 120°C for about 24 hours after the Teflon vessel was covered with a Teflon cap. After the reaction, the solid reactant was washed using DMF (N,N-dimethylformamide) and methanol in this order, and dried in an oven at about 150°C for about 4 hours after first drying at room temperature to obtain an organic-inorganic composite material (C). The organic-inorganic composite material (C) was a porous material having a structure that a metal component having zirconium ions ($Zr^{4+}$) was linked by 2-aminoterephthalic acid (organic ligand, number of coordinating functional groups: 2), and it was identified that it had fcu topology of the RCSR (reticular chemistry structure resource) database through a single-crystal X-ray diffraction analysis.

**Preparation Example 4: Preparation of Organic-Inorganic Composite Material** (D)

1.8 mmol of cupric nitrate trihydrate and 1.0 mmol of benzene-1,3,5-tricarboxylic acid (TMA-H3) in a Teflon vessel containing 12 mL of a mixed solvent (50:50) of water and ethanol and the cover was closed. The Teflon vessel is placed in a pressure vessel and heated at a temperature of about 180°C for about 12 hours. After the hydrothermal synthesis reaction, the target was filtered, and then washed and dried to obtain a target product (organic-inorganic composite material (D)). The organic-inorganic composite material (D) was a porous material having a structure that a metal component having copper ions ($Cu^{2+}$) was linked by benzene-1,3,5-tricarboxylic acid (TMA-H3, organic ligand, number of coordinating functional groups: 3), and it was identified that it had tbo topology of the RCSR (reticular chemistry structure resource) database through a single-crystal X-ray diffraction analysis.

**Preparation Example 5: Preparation of Organic-Inorganic Composite Material** (E)

0.015 g of $FeCl_3$ (3 mmol) and 0.019 g of trimesic acid (H3BTC) were added to 30 mL of DMF (N,N-dimethylformamide) and mixed. The mixed solution is transferred to a Teflon vessel, and placed in an autoclave and reacted at about 110°C for about 23 hours. The solvent was removed from the reactant using a centrifuge, and the reactant was washed several times using DMF (N,N-dimethylformamide) and methanol, and dried at 60°C overnight to obtain a target product (organic-inorganic composite material (E)). The organic-inorganic composite material (E) was a porous material having a structure that a metal component having iron ions ($Fe^{3+}$) was linked by trimesic acid (H3BTC, organic ligand, number of coordinating functional groups: 3), and it was identified that it had mtn topology of the RCSR (reticular chemistry structure resource) database through a single-crystal X-ray diffraction analysis.

**Preparation Example 6: Preparation of Organic-Inorganic Composite Material** (F)

0,1 mmol of H4dhtp (2,5-dihydroxyterephthalic acid), 0.2 mmol of $Mg(NO_3)_2{\cdot}6H_2O$ and 10 mg of polyvinyl pyrrolidone were mixed in a mixed solvent (mixed solvent of 6 mL of DMF (N,N-dimethylformamide) and 0.5 mL of $H_2O$).

The mixed solution was transferred to a Teflon vessel, the Teflon vessel was placed in a pressure vessel, and the mixed solution was subjected to hydrothermal reaction at about 120°C for about 8 hours. The reaction solution was filtered, washed with DMF (N,N-dimethylformamide) and ethanol, and then dried to obtain a target product (organic-inorganic composite material (F)). The organic-inorganic composite material (F) was a porous material having a structure that a metal component having magnesium ions ($Mg^{2+}$) was linked by H4dhtp (2,5-dihydroxyterephthalic acid, organic ligand, number of coordinating functional groups: 2), and it was identified that it had bnn topology of the RCSR (reticular chemistry structure resource) database through a single-crystal X-ray diffraction analysis.

**Preparation Example 7: Preparation of Organic-Inorganic Composite Material** (G)

15.06 g of $Al_2(SO_4)_3 \cdot 18H_2O$ was added to 70 mL of $H_2O$ to prepare Solution A. 5.2 g of fumaric acid and 5.3 g of NaOH were added to 70 mL of $H_2O$ to prepare Solution B. Subsequently, Solution B was slowly added to Solution A to prepare a mixed solution and the mixed solution was stirred for about 30 minutes while maintaining it at about 60°C. Filtration and washing processes were repeated using $H_2O$ and ethanol, and then the resultant was dried at about 100°C for about 12 hours to obtain a target product (organic-inorganic composite material (G)). The organic-inorganic composite material (G) was a porous material having a structure that a metal component having aluminum ions ($Al^{3+}$) was linked by fumaric acid (organic ligand, number of coordinating functional groups: 2), and it was identified that it had sra topology of the RCSR (reticular chemistry structure resource) database through a single-crystal X-ray diffraction analysis.

The topology of the organic-inorganic composite materials in Preparation Examples 1 to 7 and C, $M_m$, $M_L$ and L of Equation 1 were summarized and described in Table 1 below. In Table 1 below, $M_m$ is the molar mass (g/mol) of the metal ions included in the metal component of each organic-inorganic composite material in Preparation Examples 1 to 7, $M_L$ is the molar mass (g/mol) of each organic ligand, and C is the number of coordinating functional groups possessed by 1 mole of the organic ligand.

[Table 1]

| | | Preparation Example | | | | | | |
|---|---|---|---|---|---|---|---|---|
| | | 1 | 2 | 3 | 4 | 5 | 6 | 7 |
| Type | | A | B | C | D | E | F | G |
| Topology | | sod | fcu | fcu | tbo | mtn | bnn | sra |
| Equation 1 | C | 2 | 2 | 2 | 3 | 3 | 2 | 2 |
| | $M_m$ | 65.38 | 91.22 | 91.22 | 63.546 | 55.845 | 24.305 | 26.98 |
| | $M_L$ | 82.1 | 166.13 | 181.15 | 210.14 | 210.14 | 198.13 | 116.07 |
| | L | 15.93 | 10.98 | 10.07 | 9.07 | 7.97 | 2.45 | 4.65 |
| [Equation 1] $L = C \times (M_m/M_L) \times 10$ | | | | | | | | |

**Example 1**

The organic-inorganic composite material (A) of Preparation Example 1 and polyacrylonitrile (PAN) were mixed to prepare an antibacterial composition. The content of the organic-inorganic composite material was 25 weight% or so relative to the weight of the polymer (PAN). The antibacterial composition was spun by an electrospinning method to manufacture a test specimen in the form of a nonwoven fabric having a weight of about 10 to 12 gsm or so and a thickness of about 30 to 40 μm or so. The antibacterial evaluation of Test Example 2 was performed using the nonwoven fabric.

**Examples 2 to 7**

Test specimens were manufactured in the same manner as in Example 1, except that the organic-inorganic composite materials of Preparation Examples 2 to 7 were used instead of the organic-inorganic composite material of Preparation Example 1, and the antibacterial evaluation of Test Example 2 was performed using them.

**Test Example 1: Human Hazardousness Test**

Referring to the OECD guidelines for hazardousness evaluation of chemicals, the human hazardousness of organic-inorganic composite materials was evaluated by measuring acute inhalation toxicity (Test No. 436, dust atmosphere). Specifically, while changing the concentrations of the organic-inorganic composite material powders of Preparation Examples 1 to 7, the lethal concentration 50 (LC50) of 6 rodents was evaluated. Toxicity classification criteria were referred to the following GHS (globally harmonized system of classification & labeling chemicals) criteria. In the case of category 4 or 5, it can be determined that it is harmless to the human body. The results are as shown in Table 2 below. In Table 2 below, the unit of LC50 is mg/L.

Category 1 (LC50 ≤ 0.05 mg/L): DANGER, fatal if inhaled

Category 2 (0.05 mg / L < LC50 ≤ 0.5 mg / L): DANGER, fatal if inhaled

Category 3 (0.5 mg/L < LC50 ≤ 1.0 mg/L): DANGER, toxic if inhaled

Category 4 (1.0 mg/L < LC50 ≤ 5.0 mg/L): WARNING, harmful if inhaled.

Category 5 (LC50 ≥ 5.0 mg/L): WARNING, may harmful if inhaled.

[Table 2]

| | Preparation Example | | | | | | |
|---|---|---|---|---|---|---|---|
| | 1 | 2 | 3 | 4 | 5 | 6 | 7 |
| Type | A | B | C | D | E | F | G |
| LC50 | 4.98 | 5.20 | 5.14 | ≥5.0 | ≥5.0 | ≥5.0 | ≥5.0 |
| GH5 Category | 4 | 5 | 5 | 5 | 5 | 5 | 5 |

**Test Example 2: Antibacterial Property Test**

The antimicrobial activity was evaluated according to KCL-FIR 1003 (film adhesion method) as an official antimicrobial evaluation method of Korea Conformity Laboratories. The nonwoven fabric test specimen prepared in each example was cut to a size of 5 cm x 5 cm, and a stomacher film of the same size was prepared as a control specimen. The test bacterial liquids were prepared from 1 platinum loop of bacterial bodies of cultured test bacteria (*Escherichia coli* (ATCC 8739), *Staphylococcus aureus* (ATCC 6538P) and super bacteria (MRSA; *Staphylococcus aureus subsp. aureus* (ATCC 33591)) using sterile water containing a 1/500 nutrient liquid medium (nutrient broth) so that the number of bacteria was about 2.5 to 10 $\times$ $10^5$ CFU/mL or so. Thereafter, 0.2 mL of each test bacterial liquid was collected and inoculated on the test specimen (nonwoven fabrics of Examples 1 to 9) in a petri dish, and the top of the dropped test bacterial liquid was covered with a stomacher film having a size of 4 cm $\times$ 4 cm, whereby the test bacterial liquid was allowed to spread throughout the film. The same process was performed for the control specimen. Petri dishes containing the test specimen and the control specimen were incubated at 37°C for 24 hours. The viable bacteria count was measured from the washing solution of the inoculated test bacteria by an agar plate culture method. Fig. 1 schematically shows such an evaluation process, and Figs. 2 to 4 are antibacterial evaluation results of Escherichia coli, antibacterial evaluation results of Staphylococcus aureus and antibacterial evaluation results of super bacteria in Example 1, respectively.

Experimental results for each example are as shown in Table 3, and the degree of antibacterial property was expressed as a bacteriostatic rate (sterilization rate) (%).

[Table 3]

| | Example | | | | | | |
|---|---|---|---|---|---|---|---|
| | 1 | 2 | 3 | 4 | 5 | 6 | 7 |
| Escherichia coli bacteriostatic rate (%) | ≥99 | ≥99 | ≥99 | ≥99 | ≥99 | ≥99 | ≥99 |
| Staphylococcus aureus bacteriostatic rate (%) | ≥99 | ≥99 | ≥99 | ≥99 | ≥99 | ≥99 | ≥99 |
| MRSA bacteriostatic rate (%) | ≥99 | ≥99 | ≥99 | ≥99 | ≥99 | ≥99 | ≥99 |

As confirmed in Table 3, the antibacterial compositions of the present application exhibited a bacteriostatic rate of 99% or more for MRSA, which are super bacteria, as well as *Escherichia coli* and *Staphylococcus aureus*. The

bacteriostatic rate of 99% or more means that the viable bacteria count is 1/100 or less.

## Claims

1. An antibacterial composition, comprising:
an organic-inorganic composite material formed of building blocks,

    wherein the building block comprises a metal component comprising a metal belonging to the third to fifth periods of the periodic table; and an organic ligand,
    wherein the organic-inorganic composite material has a skeleton structure of fcu, sod, sra, mtn, bnn, tbo, csq, pcu, qom, nbo, cag, gar, crb, gls, mer, rho, fau, lta, poz, moz, zni, dia, lcs, dft, ana, frl or gme in the RCSR database, and
    wherein an L value of Equation 1 below is in a range from 2 to 45:

    [Equation 1]

    $$L = C \times (M_m/M_L) \times 10$$

    wherein the $M_m$ is the molar mass of the metal, the $M_L$ is the molar mass of the component other than the metal component in the building block, and the C is the number of coordinating functional groups in the organic ligand.

2. The antibacterial composition according to claim 1, wherein the L value in Equation 1 is in a range of 2 to 20.

3. The antibacterial composition according to claim 1, wherein the ratio ($M_m/M_L$) of $M_m$ to $M_L$ in Equation 1 is in a range of 0.1 to 2.5.

4. The antibacterial composition according to claim 1, wherein the metal component forms a surface having an antibacterial activity value of less than 2.0 in an antibacterial property test according to JISZ2801.

5. The antibacterial composition according to claim 1, comprising any one metal selected from the group consisting of Zr, Zn, Fe, Cu, Al, Mg, Ni and Cr.

6. The antibacterial composition according to claim 1, wherein the free ligand forms a surface having an antibacterial activity value of less than 2.0 in an antibacterial property test according to JISZ2801.

7. The antibacterial composition according to claim 1, wherein the organic ligand is one or more of compounds represented by Formulas 1a and 1b below:

    [Formula 1a]

    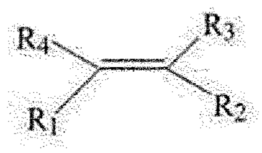

    wherein, $R_1$ to $R_4$ are each independently hydrogen, an alkyl group, an alkoxy group, a hydroxy group, an amino group or a coordinating functional group, and at least one of $R_1$ to $R_4$ is a coordinating functional group, where the coordinating functional group is selected from a carboxyl group (-COOH), a carboxylic acid anion group (-COO-), an amine group ($-NH_2$), a nitro group ($-NO_2$), a halogen group (-X), and a sulfonic acid group ($-SO_3H$).

[Formula 1b]

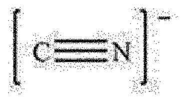

**8.** The antibacterial composition according to claim 7, wherein $R_3$ and $R_4$ are linked to each other to form a cyclic compound represented by Formula 2 below:

[Formula 2]

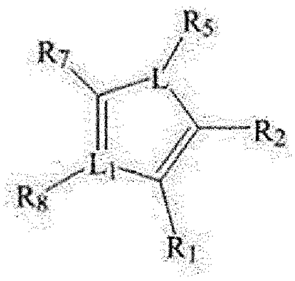

wherein, L is a nitrogen atom or a divalent residue of Formula 3 below, $L_1$ is a nitrogen atom or a carbon atom, and $R_1$, $R_2$, $R_5$, $R_7$ and $R_8$ are each independently hydrogen, an alkyl group, an alkoxy group, a hydroxy group, an amino group or a coordinating functional group, where $R_8$ is not present when $L_1$ is a nitrogen atom.

[Formula 3]

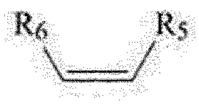

wherein, $R_8$ and $R_5$ are each independently hydrogen, an alkyl group, an alkoxy group, a hydroxy group, an amino group or a coordinating functional group.

**9.** The antibacterial composition according to claim 8, wherein L and $L_1$ in Formula 2 are nitrogen atoms, and $R_1$, $R_2$, $R_8$ and $R_7$ are each independently hydrogen, an alkyl group, an alkoxy group, a hydroxy group, an amino group or a coordinating functional group.

**10.** The antibacterial composition according to claim 8, wherein L in Formula 2 is a divalent residue of Formula 3, $L_1$ is a carbon atom, $R_1$ and $R_5$ or $R_1$, $R_8$ and $R_7$ are coordinating functional groups, and the rest of $R_1$, $R_2$ and $R_8$ to $R_8$ are each independently hydrogen, an alkyl group, a hydroxy group, an amino group or a coordinating functional group.

**11.** The antibacterial composition according to claim 1, having antibacterial properties against gram-negative bacteria, gram-positive bacteria and super bacteria.

**12.** The antibacterial composition according to claim 1, wherein the lethal concentration 50 (LC50) of the acute inhalation toxicity test exceeds 1.0 mg/L and the composition is non-toxic to the human body.

**13.** The antibacterial composition according to claim 1, further comprising one or more selected from the group consisting of drug delivery substances, fragrances, deodorants and antibacterial substances.

**14.** The antibacterial composition according to claim 1, wherein the composition is used for syringe materials, injection storage containers, injection storage tube materials, infusion pack materials, infusion storage containers, infusion storage tube materials, gauze, bandages, sterile gloves, antibacterial fibers, endothelial materials for clothes, endothelial materials for shoes, automobile interior plastic materials, indoor paints, outdoor paints, kitchen container materials, kitchen utensil materials, home appliance materials, plastic materials for toilets, plastic materials for bathrooms, food packages or medical devices.

Fig. 1

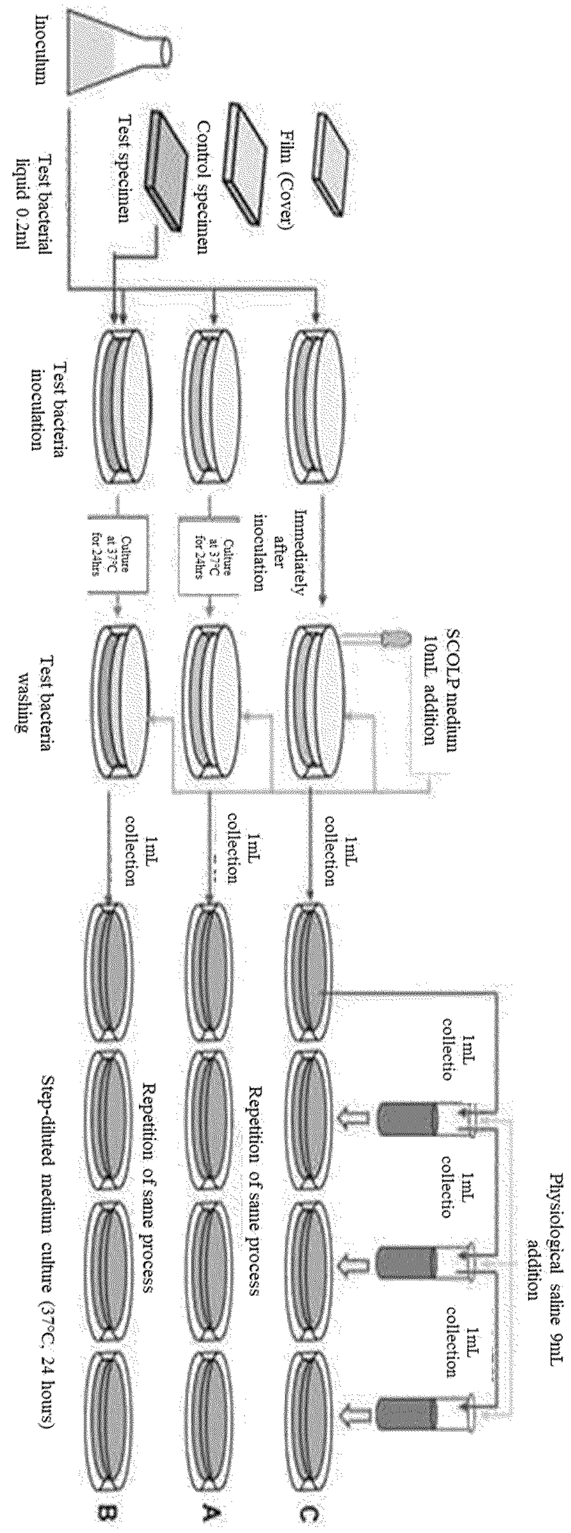
Inoculum
Film (Cover)
Control specimen
Test specimen
Test bacterial liquid 0.2ml
Test bacteria inoculation
Immediately after inoculation
Culture at 37°C for 24hrs
Culture at 37°C for 24hrs
SCOLP medium 10mL addition
Test bacteria washing
1mL collection
1mL collection
1mL collection
Physiological saline 9mL addition
1mL collectio
1mL collectio
1mL collection
Repetition of same process
Repetition of same process
Step-diluted medium culture (37°C, 24 hours)
C
A
B

Fig. 2

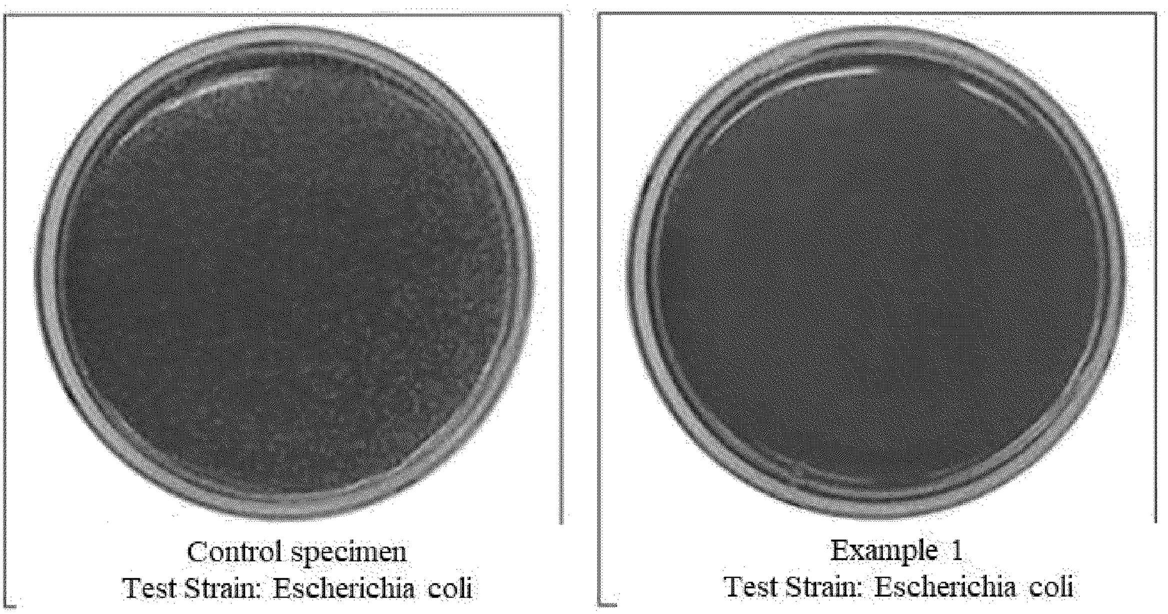

Control specimen
Test Strain: Escherichia coli

Example 1
Test Strain: Escherichia coli

Fig. 3

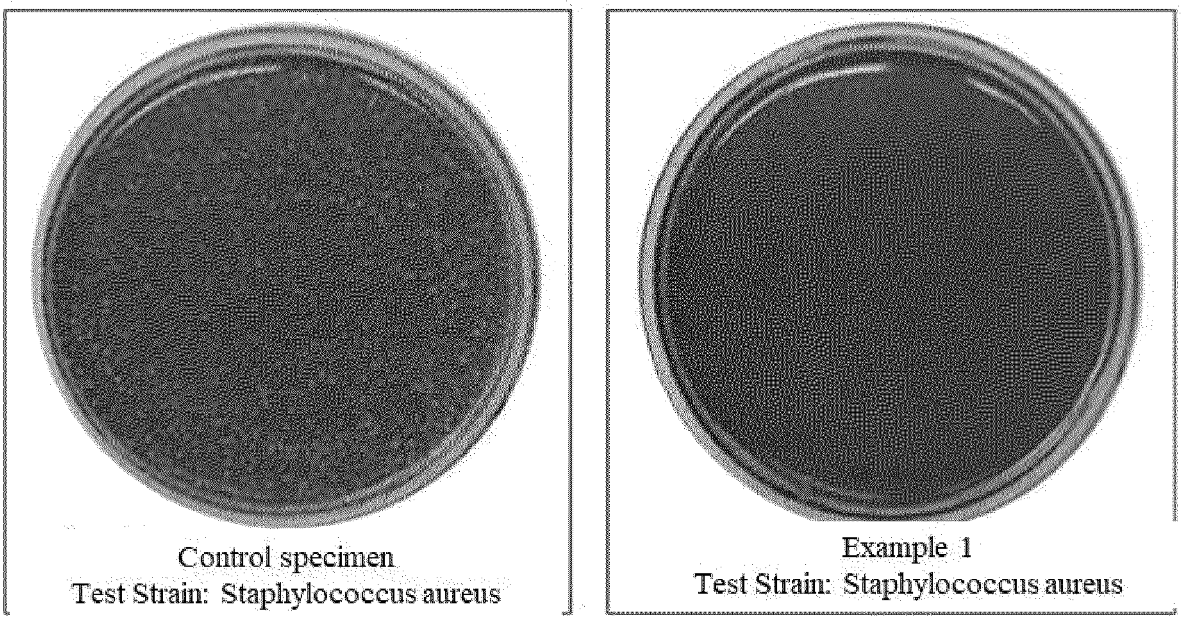

Control specimen
Test Strain: Staphylococcus aureus

Example 1
Test Strain: Staphylococcus aureus

Fig. 4

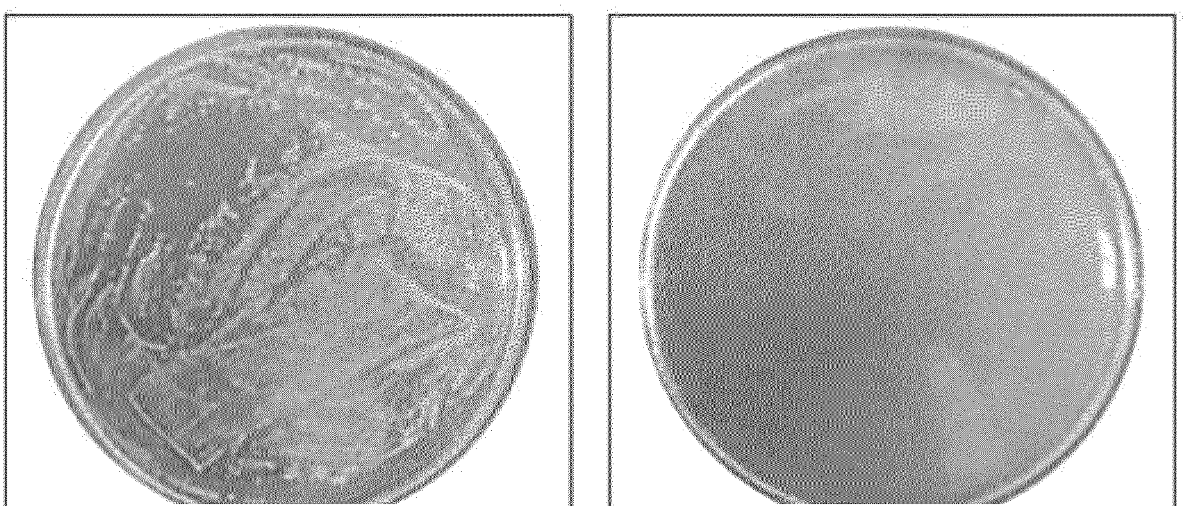

Control specimen
Test Strain: MRSA

Example 1
Test Strain: MRSA

## INTERNATIONAL SEARCH REPORT

International application No. PCT/KR2020/000719

A. CLASSIFICATION OF SUBJECT MATTER

*A01N 55/02(2006.01)i, A01N 43/50(2006.01)i, A01N 43/36(2006.01)i, A01N 37/34(2006.01)i*

According to International Patent Classification (IPC) or to both national classification and IPC

B. FIELDS SEARCHED

Minimum documentation searched (classification system followed by classification symbols)
A01N 55/02; C07F 1/08; C07F 15/06; C07F 5/06; C07F 7/00; A01N 43/50; A01N 43/36; A01N 37/34

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), STN (Registry, Caplus) & Keywords: antibacterial composition, super bacteria, metal organic framework, organic ligand, coordinate covalent bond

C. DOCUMENTS CONSIDERED TO BE RELEVANT

| Category* | Citation of document, with indication, where appropriate, of the relevant passages | Relevant to claim No. |
|---|---|---|
| X | KARIMI ALAVIJEH, R. et al. Investigation of reasons for metal-organic framework's antibacterial activities. Polyhedron. 2018 (Electronic publication date: 25 September 2018), vol. 156, pages 257-278<br>See abstract; 4. Cu-based MOFs section; 5. Zn-based MOFs section; tables 1, 3, 9. | 1-14 |
| X | RODRIGUEZ, H. S. et al. Antibacterial activity against Escherichia coli of Cu-BTC (MOF-199) metal-organic framework immobilized onto cellulosic fibers. Journal of applied polymer science. 2014, vol. 131, no. 19, article no. 40815, inner pages 1-5<br>See abstract; EXPERIMENTAL section. | 1-8,10-14 |
| A | ROY, A. K. et al. Antibacterial activity of prussian blue. Journal of green science and technology. vol. 1, no. 1, pages 1-3<br>See the entire document. | 1-14 |
| A | KR 10-2018-0028756 A (KOREA RESEARCH INSTITUTE OF CHEMICAL TECHNOLOGY) 19 March 2018<br>See the entire document. | 1-14 |
| A | KR 10-2016-0011191 A (THE QUEEN'S UNIVERSITY OF BELFAST) 29 January 2016<br>See the entire document. | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 MAY 2020 (01.05.2020) | **01 MAY 2020 (01.05.2020)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

**INTERNATIONAL SEARCH REPORT**

International application No. **PCT/KR2020/000719**

C (Continuation). DOCUMENTS CONSIDERED TO BE RELEVANT

| Category* | Citation of document, with indication, where appropriate, of the relevant passages | Relevant to claim No. |
|---|---|---|
| PX | WU, B. et al. Metal-organic framework-based chemo-photothermal combinational system for precise, rapid, and efficient Antibacterial Therapeutics. Pharmaceutics. 2019 (Publication date: 06 September 2019), vol. 11, no. 9, article no. 463, inner pages 1-15<br>See abstract; 2. Materials and Methods section. | 1-14 |

Form PCT/ISA/210 (continuation of second sheet) (January 2015)

**INTERNATIONAL SEARCH REPORT**
Information on patent family members

International application No.
**PCT/KR2020/000719**

| Patent document cited in search report | Publication date | Patent family member | Publication date |
|---|---|---|---|
| KR 10-2018-0028756 A | 19/03/2018 | None | |
| KR 10-2016-0011191 A | 29/01/2016 | AU 2014-272855 A1 | 05/11/2015 |
| | | AU 2014-272855 A1 | 04/12/2014 |
| | | BR 112015029518 A2 | 25/07/2017 |
| | | CA 2909372 A1 | 04/12/2014 |
| | | CN 105246906 A | 13/01/2016 |
| | | CN 105246906 B | 31/07/2018 |
| | | EP 3004125 A1 | 13/04/2016 |
| | | EP 3004125 B1 | 01/05/2019 |
| | | JP 2016-522834 A | 04/08/2016 |
| | | US 2016-0176070 A1 | 23/06/2016 |
| | | US 9815222 B2 | 14/11/2017 |
| | | WO 2014-191725 A1 | 04/12/2014 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190005276